# EUROPEAN PATENT APPLICATION

(11) **EP 0 559 498 A1**
(43) Date of publication of application: **08.09.1993**
(21) Application number: 93301712.1
(22) Date of filing: 08.03.1993
(51) Int. Cl.: H04N 9/79, H04N 9/81

(54) **Synchronisation system for high-definition signal recording apparatus**

(30) Priority: 06.03.1992 JP 49497/92
(71) Applicant: PIONEER ELECTRONIC CORPORATION, Meguro-ku Tokyo (JP)
(72) Inventor: Okuda, Yoshiyuki, c/o Pioneer Tokorozawa Plant, Tokorozawa-City, Saitama (JP)
(74) Representative: Tomlinson, Kerry John

(57) **Abstract**

Disclosed is an improved hi-vision signal recording apparatus, which will not increase the frequency bandwidth of a hi-vision signal to be recorded in the cases where a color reference signal is added. The hi-vision signal recording apparatus comprises: means for accumulating a train of input hi-vision signals; means for dividing the accumulated hi-vision signals for every three consecutive scan lines; means for recording those signals corresponding to the divided three scan lines as three tracks (Y, P_{R}. P_{B}) on a recording medium and a sync signal generator. In this system, the positive level of a three-level horizontal sync signal needed for signal recording on the three tracks is used for a color reference signal to be recorded on the three tracks, the color reference signal giving a color reference at the time of signal reproduction.

## Description

The present invention relates to a sync signal system for a high-definition (hereinafter referred to as hi-vision) signal recording apparatus which records a hi-vision signal on an optical disk or the like.

A hi-vision signal consisting of 1125 horizontal scan lines per frame has a very wide frequency bandwidth of about 30 MHz as compared with the conventional NTSC signal having 525 horizontal scan lines.

Japanese Patent Laid Open No. 4-37384, entitled "Hi-vision Signal Recording Apparatus And Recording Medium Therefor", discloses a method of recording such a wideband hi-vision signal on an optical disk or the like.

According to this method, three tracks on a recording medium are simultaneously used, a train of input hi-vision signals are accumulated before being processed, the accumulated hi-vision signals are divided for every three consecutive scan lines, and those signals corresponding to the divided three scan lines are recorded in association with the three tracks. In other words, the simultaneous use of three tracks increases the sweep time by a factor of three and ensure signal recording with the frequency reduced to one-third.

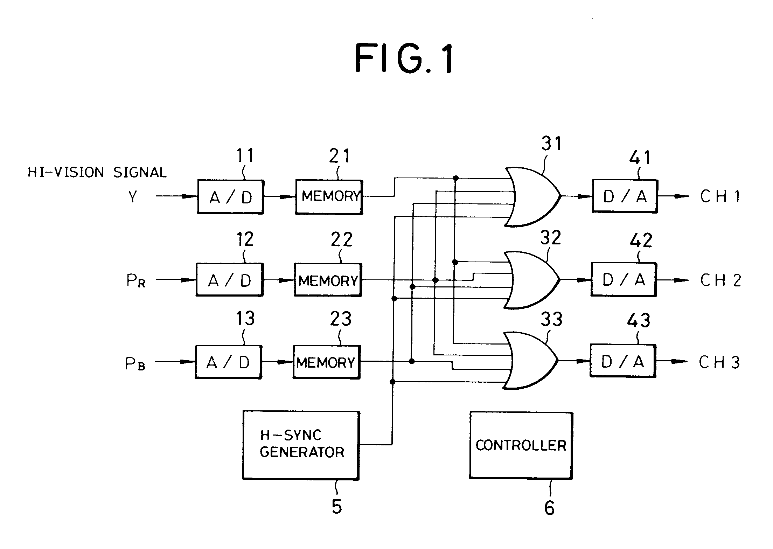

The conventional method of recording a hi-vision signal will be described below referring to Figs. 1, 4 and 5.

Fig. 1 illustrates the hardware structure of a prior art system. The apparatus comprises analog-to-digital (A/D) converters 11 to 13, memories 21 to 23, OR gates 31 to 33, digital-to-analog (D/A) converters 41 to 43, a horizontal sync signal (H-SYNC) generator 5 and a controller 6.

A hi-vision signal includes a luminance signal Y and two kinds of color-difference signals P_{R} and P_{B}, all in an analog form, which are input to the A/D converters 11 to 13 before being stored in the memories 21 to 23.

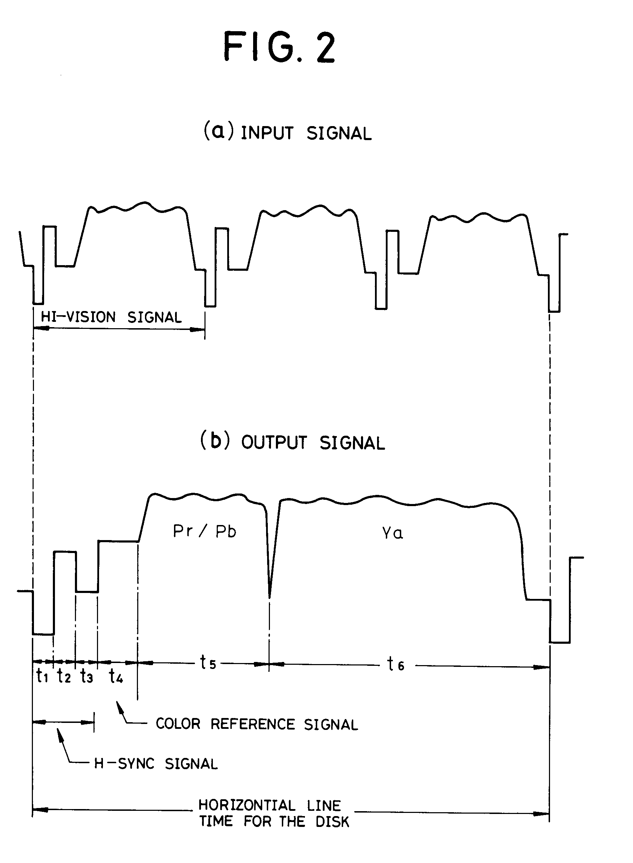

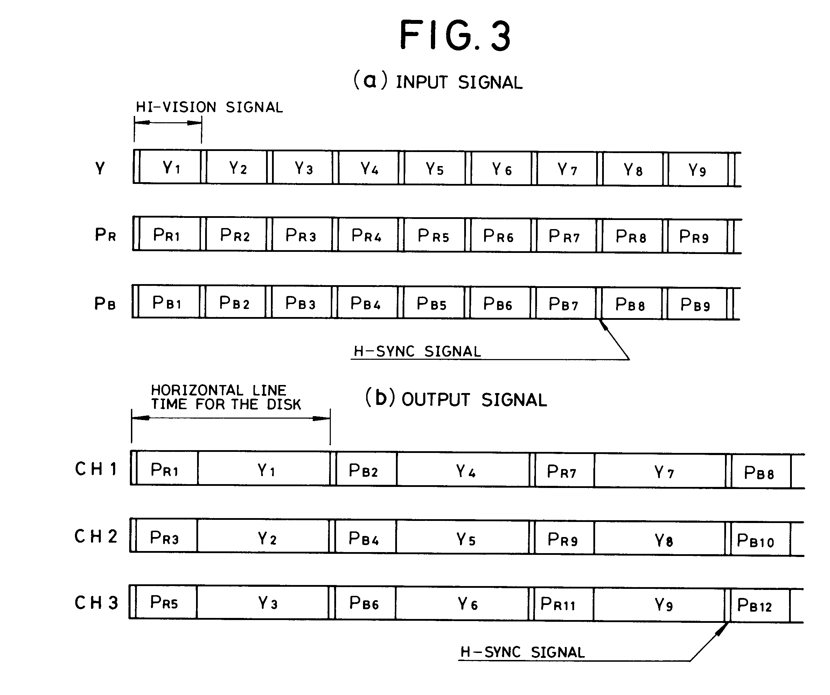

A train of luminance signals Y are input to the A/D converter 11 each following a horizontal sync signal as shown in (a) in Fig. 2, and then the output digital signals of A/D converter 11 are progressively stored in the memory 21 in the form shown in (a) in Fig. 3. Likewise, the two kinds of color-difference signals P_{R} and P_{B} are converted by the A/D converters 12 and 13 into digital signals, which are then sequentially stored in the memories 22 and 23 as shown in (a) in Fig. 3.

The controller 6 controls reading of signals stored in the memories 21 to 23. The signal reading from the memories 21 to 23 is executed in association with three tracks on a recording medium, and the read-out signals are respectively supplied to the OR-gates 31 to 33.

First, a horizontal sync signal is generated from the H-SYNC generator 5 as shown in (b) in Fig. 2. The generation of the horizontal sync signal will be described later in detail. After the generation of the sync signal comes reading of color-difference signals. This signal reading is performed in such a way that the signal P_{R1} is read out for a channel CH1, the signal P_{R3} for a channel CH2, ant the signal P_{R5} for a channel CH3, and then the signals Y₁, Y₂ and Y₃ are similarly read out for those three channels, as shown in (b) in Fig. 3. Then, the above reading is repeated for the next horizontal sync signal and the subsequent luminance and color-difference signals in order as shown in (b) in Fig. 3.

The signals read out from the memories 21 to 23 in a time-divisional manner are multiplexed by the OR-gates 31 to 33, and the resultant signals are converted into analog signals by the D/A converters 41 to 43 as shown in (b) in Fig. 2.

The H-SYNC generator 5 outputs a three-level horizontal sync signal which can take a negative level (H_{L}) in a period t1, a positive level (H_{H}) in a period t2 and a pedestal level (H_{P}) in a period t3, as shown in (b) in Fig. 2, and in a period t4, it outputs a color reference signal whose value provides a color reference at the time a signal is read out from the recording medium to reproduce a hi-vision signal. The value of the color reference signal lies between the maximum and minimum values of the luminance signal in accordance with the gray scale.

The analog signals from the D/A converters 41 to 43, which are acquired by D/A conversion of the data read from the memories 21 to 23 multiplexed with the data from the H-SYNC generator 5, have a period three times that of the input signal shown in (a) in Fig. 2. The threefold increase of the period means that the frequency component of the input signal is reduced to 1/3. Accordingly, a wideband hi-vision signal is converted into a low-bandwidth hi-vision signal, which is in turn recorded on a recording medium.

As described above, according to the conventional hi-vision signal recording apparatus, a color reference signal, which gives a color reference at the time of reproducing a hi-vision signal, is time-divisionally multiplexed with the horizontal sync signal and hi-vision signal before being recorded on three tracks on a recording medium.

Accordingly, this system requires the additional period t4 for the color reference signal, compressing the periods for both the horizontal sync signal and hi-vision signal as shown in (b) in Fig. 2. This results in an increase in the frequency bandwidth.

It is therefore an object of the present invention to provide an improved sync signal system for a hi-vision signal recording apparatus, which will not increase the frequency bandwidth of a hi-vision signal to be recorded even in the cases where a color reference signal is added.

To achieve this object, the present invention provides a hi-vision signal recording apparatus comprising: means for accumulating a train of input hi-vision signals; means for dividing the accumulated hi-vision signals for every three consecutive scan lines; means for recording those signals corresponding to the divided three scan lines as three tracks on a recording medium; and a sync signal generator; wherein said sync signal generator uses the positive level of a three-level horizontal sync signal needed for signal recording on said three tracks for a color reference signal to be recorded on said three tracks, said color reference signal giving a color reference at the time of signal reproduction.

In the hi-vision signal recording apparatus of the present invention, the positive level of a three-level horizontal sync signal of a hi-vision signal to be recorded on a recording medium set in the hi-vision signal recording apparatus is converted into the level of a color reference signal which gives a color reference at the time of reproducing the hi-vision signal from the recording medium, and this level is shared by both the horizontal sync signal and the color reference signal.

Since the positive level of a three-level horizontal sync signal is used as the signal that gives a color reference at the time of reproducing a hi-vision signal, it is unnecessary to particularly provide a period for sending a color reference signal, thus preventing the frequency bandwidth of a signal to be recorded on a recording medium from increasing.

An embodiment of the present invention will now be described by way of example only and with reference to the accompanying drawings, in which:
Fig. 1 is a diagram illustrating the structure of a prior art system;
Fig. 2 is a diagram showing waveforms of input and output signals appearing in the prior art;
Fig. 3 is an exemplary diagram for explaining a hi-vision signal recording method;
Fig. 4 presents a specific example of a horizontal sync signal generator of this embodiment; and
Fig. 5 is a chart for explaining the output signal of this embodiment.

A hi-vision recording apparatus according to the present invention has the same construction as the prior art showing in Fig. 1, except the inside construction of the H-SYNC generator 5.

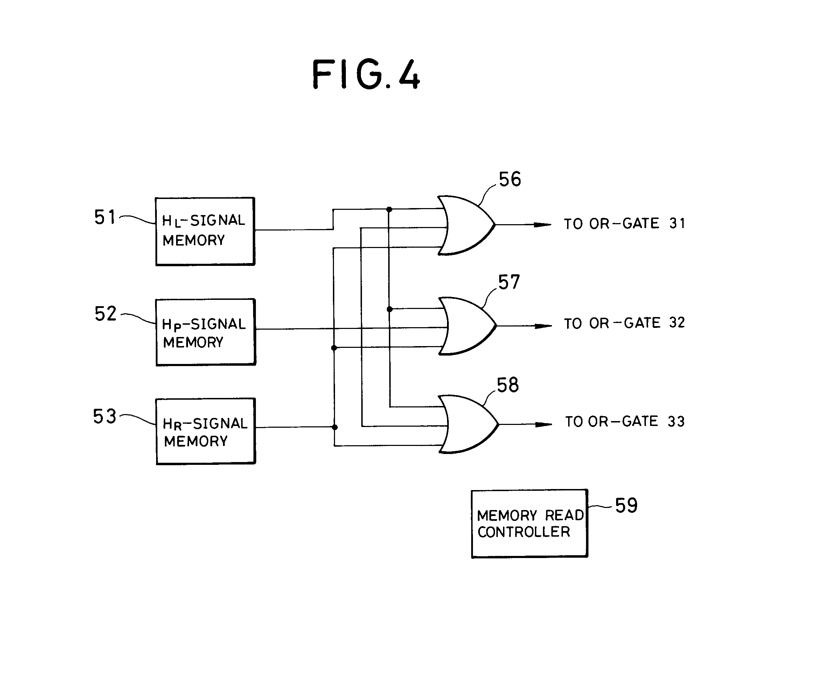

Fig. 4 shows a specific example of a H-SYNC generator 5 according to this embodiment. This H-SYNC generator 5 includes an H_{L}-signal memory 51 where data corresponding to the negative level (H_{L}) of a horizontal sync signal is stored, an H_{P}-signal memory 52 where data corresponding to the pedestal level (H_{P}) of the horizontal sync signal is stored, an H_{R}-signal memory 53 where data corresponding to the level (H_{R}) of a color reference signal is stored, OR-gates 56 to 58, and a memory read controller 59 for controlling reading of data from the memories 51 to 53.

Data reading from the memories 21 to 23 where hi-vision signals are stored is the same as already explained in relation to the prior art.

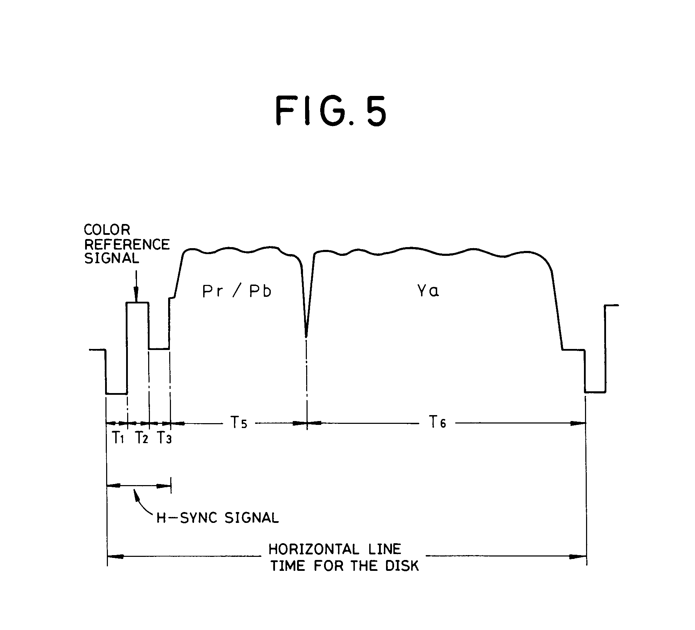

The period of the horizontal sync signal in the H-SYNC generator 5 will now be described. First, the memory read controller 59 reads data from the H_{L}-signal memory 51 and sends it to the OR-gates 56 to 58 in a period T₁, as shown in Fig. 5. Next, the memory read controller 59 reads data from the H_{R}-signal memory 53 and sends it to the OR gates 56 to 58 in a period T₂. After that, the memory read controller 59 reads data from the H_{P}-signal memory 52 and sends it to the OR-gates 56 to 58 in a period T₃. Then, the controller 6 reads data from the memories 21 to 23 in the manner explained in relation to the prior art.

It is apparent from the above that the feature of the embodiment lies in that the positive level portion of the horizontal sync signal which is sent in the period T₂ is used as the level of a color reference signal. In other words, that positive level portion serves also as the color reference signal.

Therefore, the period t₄ for the color reference signal shown in (b) in Fig. 2 in the prior art is eliminated, so that the controller 6 and the memory read controller 59 can control signal reading so as to send the horizontal sync signal only in the periods T1-T3 and the luminance and color-difference signals in the periods T5 and T6.

In short, the present invention has the following advantage over the prior art. Since the positive level of a three-level horizontal sync signal is used as the signal that gives a color reference at the time of reproducing a hi-vision signal, it is unnecessary to particularly provide a period for sending a color reference signal, thus preventing the frequency bandwidth of a signal to be recorded on a recording medium from increasing.

## Claims

1. A hi-vision signal recording apparatus comprising:
means (21,22,23) for accumulating a train of input hi-vision signals;
means for dividing the accumulated hi-vision signals for every three consecutive scan lines;
means (6,31,32,33,41,42,43) for recording those signals corresponding to the divided three scan lines as three tracks on a recording medium;
and a sync signal generator (51,52,53,59);
wherein said sync signal generator uses the positive level of a three-level horizontal sync signal needed for signal recording on said three tracks for a color reference signal to be recorded on said three tracks, said color reference signal giving a color reference at the time of signal reproduction.
